(19) Europäisches Patentamt
European Patent Office
Office européen des brevets

(11) **EP 1 755 345 A2**

(12) **EUROPEAN PATENT APPLICATION**

(43) Date of publication:
**21.02.2007 Bulletin 2007/08**

(51) Int Cl.:
***H04N 7/26*** (2006.01)

(21) Application number: **06116566.8**

(22) Date of filing: **04.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **19.08.2005 EP 05300681**

(71) Applicant: **Thomson Licensing**
**92100 Boulogne-Billancourt (FR)**

(72) Inventors:
• **Chen, Zhi Bo**
**100085, Beijing (CN)**
• **Nie, Zhen Gang**
**100085, Beijing (CN)**
• **Zhu, Li Hua**
**100085, Beijing (CN)**

(74) Representative: **Hartnack, Wolfgang**
**Deutsche Thomson-Brandt GmbH**
**European Patent Operations**
**Karl-Wiechert-Allee 74**
**30625 Hannover (DE)**

(54) **Iterative global motion estimation**

(57)     Global motion estimation techniques play an important role in advanced video coding. Global motion estimation is useful for increasing the coding efficiency. However, it is of high complexity due to using a multiple parameters model and an iterative processing. The invention is based on a four-parameter linear global motion estimation model. From particular block motion vectors of a frame a set of global motion parameters is calculated in an iterative process. In each iteration loop, the motion vector outliers in symmetrical motion vector blocks are processed according to a given set of rules in order to keep the symmetrical structure during the iterative process.

Fig.1

**Description**

The invention relates to a method and to an apparatus for calculating iteratively for a picture or a picture sequence a set of global motion parameters from motion vectors assigned to blocks into which each picture is divided, wherein not all block motion vectors of a picture are used for the global motion parameter calculation.

Background

Global motion estimation (GME) techniques play an important role in advanced video coding, such as in the 'sprite' video coding technique in the MPEG-4 Visual video coding standard and in the 'reference picture re-sampling' technique in Annex P of the H.263+ video coding standard. Global motion estimation is useful for increasing the coding efficiency (in particular for low-bitrate coding), for optimised bit allocation, for coarse video segmentation in acquiring low level content analysis information like foreground content and background content by checking different motion properties, and is in particular useful for encoding some special scenes like fly-over surveillance.

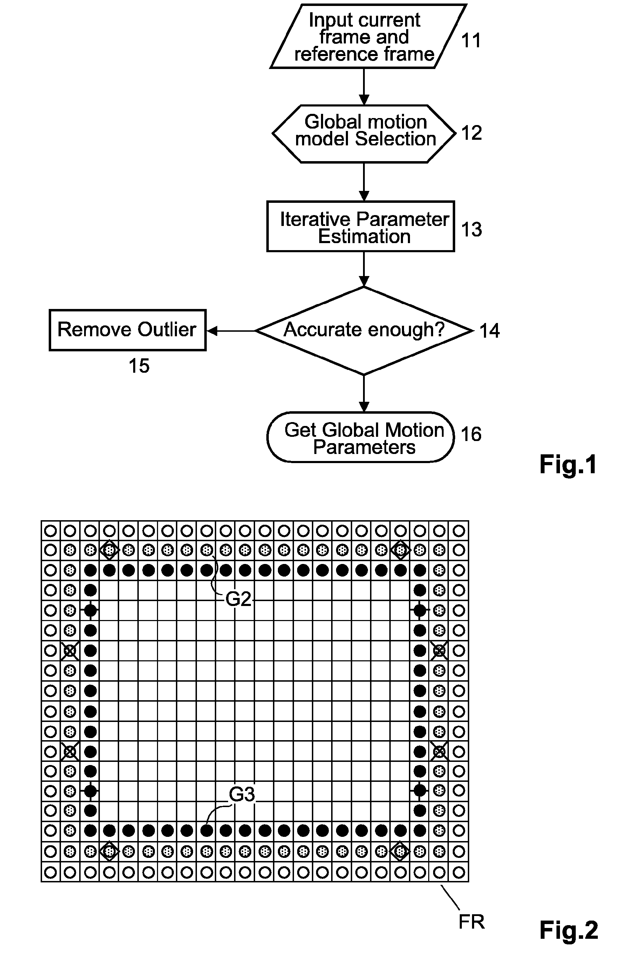

Fig. 1 shows a general flowchart for carrying out a global motion estimation. A reference frame and a current frame are input, followed by selecting the global motion model to be used. Thereafter an iterative processing (for example Gauss-Newton, Gauss-Raphson, Marquardt-Levenberg, or Iterative Least-Square) is used for estimating candidate global motion parameters. After each iteration loop some block motion vector outliers are identified and removed before starting the next iteration loop, until the optimum parameters are received, i.e. motion parameters that are accurate enough.

However, GME is of high complexity due to using a multiple parameters model (4-parameters, 6-parameters or even 8-parameters model) and an iterative processing. Some fast GME algorithms have been proposed in solving this problem:

[1] Tuan-Kiang Chiew, James T.H. Chung-How, et al., "Rapid Block-Based Global Motion Estimation and its Applications", ICCE, June 2002;
[2] Gagan B. Rath, Anamitra Makur, "Iterative Least Squares and Compression Based Estimations for a Four-Parameter Linear Global Motion Model and Global Motion Compensation", IEEE Transactions on Circuits and Systems for Video Technology, volume 9, number 7, October 1999, pages 1075-1099;
[3] G. Sorwar, M.M. Murshed and L.S. Dooley, "Fast Global Motion Estimation using Iterative Least-Square Estimation Technique", 2003 Joint Conference of the Fourth International Conference on Information, Communications and Signal Processing and Fourth Pacific-Rim Conference on Multimedia, ICICS-PCM, Singapore, 15-18 December 2003;
[4] Sanjeev Kumar, Mainak Biswas and Truong Q Nguyen, "GLOBAL MOTION ESTIMATION IN FREQUENCY AND SPATIAL DOMAIN", ICASSP, May 2004.

In the following description three further documents are mentioned:

[5] Yuwen He, Bo Feng, Shiqiang Yang, et al., "Fast Global Motion Estimation for Global Motion Compensation Coding", ISCSA, May 2001;
[6] Yeping Su, Ming-Ting Sun, Vincent Hsu, "Global Motion Estimation From Coarsely Sampled Motion Vector Field And the Applications", ISCSA, May 2003;
[7] Joerg Heuer, Andre Kaup, "Global Motion Estimation in Image Sequences Using Robust Motion Vector Field Segmentation", ACM international conference on Multimedia, Nov.1999.

In the prior art, global motion estimation methods can be coarsely classified in two categories: spatial domain GME and frequency domain GME.

Invention

This invention deals with global motion estimation processing in the spatial domain.
Computational complexity and motion estimation accuracy are two main concerns in designing an GME processing. The performance of GME will increase by using a higher-accuracy model (i.e. a model with more motion parameters), but the resulting processing complexity will also increase correspondingly.
Known GME algorithms try to achieve a non-optimum trade-off between complexity and accuracy.
Some methods (cf. [1][2][3][5][6]) use a simple model, or use sub-sampling and a hierarchical structure for decreasing the complexity. Thereby usually SSD (sum of squared differences) or SAD (sum of absolute differences) are used as an error metric. SSD minimisation is typically accomplished by gradient descent iterative methods like Gauss-Newton, Gauss-Raphson, Marquardt-Levenberg and iterative Least-Square method. Due to the disturbances of independent moving objects and miss-matching motion, the estimation accuracy is low if block motion vector outliers which do not match the true global motion estimation are not eliminated. Therefore these algorithms use different strategies to remove outliers for improving the accuracy during iteration.

However, there is a need for low-complexity GME processing with no degradation in accuracy. Based on the algorithms described in documents [2] and [3], and on some additional assumptions and a refined symmetrical structure, an inventive iterative least square motion estimation is described that calculates with decreased computational complexity global motion parameters but keeps the motion parameter accuracy or precision.

A problem to be solved by the invention is to provide accurate global motion parameters with low-complexity processing. This problem is solved by the method disclosed in claim 1. A corresponding storage medium is disclosed in claim 9. An apparatus that utilises this method is disclosed in claim 2.

The invention uses a fast global motion parameter estimation processing, whereby the iterative least square estimation (ILSE) is based on a four-parameter linear global motion estimation model.

Basically, for each block or macroblock in a frame a motion vector is or was calculated in advance. From all the involved block or macroblock motion vectors of that frame a single set of global motion parameters, or a single global motion vector, is calculated per picture.

In a first step in an iteration loop, the outlier points (i.e. outlier block or macroblock motion vectors) are removed based on the assumption that object's motion mostly focuses in the centre of the image, that some moving objects will move from outside into the image, and on a pre-analysis (e.g. local motion vectors information, such as the non-reliable zero motion vector for a block that has only a weak texture information in it and is not located at an edge in the picture content). Further, several rules for refinement are established in order to keep the symmetrical structure during the iterative process, by which keeping a simplified expression of the result of the least square estimation can be derived for computational load reduction. In each iteration loop, from the remaining motion vectors values and the remaining corrected motion vectors values updated candidate global motion estimation parameters are calculated. The iterations are continued until a desired or sufficient accuracy is achieved or until a given loop count is reached.

By using the invention, the computational load is reduced by roughly 68% in the first iteration, and in following iterations 50% of the addition operations are eliminated during calculation of the parameters $a1$ and $a3$, and 100% of the multiplication operations and 75% of the addition operations are eliminated during calculation of the parameters $a2$ and a4, as described below in detail.

The invention can be used for an optimised processing in video coding and segmentation.

In principle, the inventive method is suited for calculating iteratively for a picture or a picture sequence a set of global motion parameters from motion vectors assigned to blocks or macroblocks into which each picture is divided, wherein not all block or macroblock motion vectors of a picture are used for said global motion parameter calculation but only motion vectors for blocks or macroblocks which are located in a ring near the borders but not at the borders of said picture, and wherein for each iteration loop the following steps are carried out:

- checking for each symmetrical block group in said ring of blocks or macroblocks, said symmetrical block group being related to a pre-determined number of blocks or macroblocks, the quantity of motion vectors the motion amount values of which, or the motion component amount values of which, are outliers when compared to a corresponding motion vector calculated for the corresponding block or macroblock position from the latest set of candidate global motion parameters;
- deciding according to a given set of rules whether, for the current and further iteration loops to be carried out, one or more original motion vector values of the corresponding symmetrical block group are to be corrected and kept, or the motion vector values of the corresponding symmetrical block group are no more used;
- calculating from the resulting motion vector values an updated set of candidate global motion parameters;
- checking whether or not a desired or sufficient accuracy of said set is achieved or a given iteration loop count is reached and, if true, outputting the corresponding set of global motion parameters and, if not true, continuing with the next iteration loop.

In principle the inventive apparatus is suited for calculating iteratively for a picture or a picture sequence a set of global motion parameters from motion vectors assigned to blocks or macroblocks into which each picture is divided, wherein not all block or macroblock motion vectors of a picture are used for said global motion parameter calculation but only motion vectors for blocks or macroblocks which are located in a ring near the borders but not at the borders of said picture, said apparatus including:

- means being adapted for checking, in each iteration loop, for each symmetrical block group, said symmetrical block group being related to a pre-determined number of blocks or macroblocks, in said ring of blocks or macroblocks the quantity of motion vectors the motion amount values of which, or the motion component amount values of which, are outliers when compared to a corresponding motion vector calculated for the corresponding block or macroblock position from the latest set of candidate global motion parameters;

- means being adapted for deciding according to a given set of rules whether, for the current and further iteration loops to be carried out, one or more original motion vector values of the corresponding symmetrical block group are to be corrected and kept, or the motion vector values of the corresponding symmetrical block group are no more used;

- means being adapted for calculating from the resulting motion vector values an updated set of candidate global motion parameters;

- means being adapted for checking whether or not a desired or sufficient accuracy of said set is achieved or a given iteration loop count is reached and, if true, for outputting the corresponding set of global motion parameters and, if not true, for continuing with the next iteration loop.

Advantageous additional embodiments of the invention are disclosed in the respective dependent claims.

Drawings

Exemplary embodiments of the invention are described with reference to the accompanying drawings, which show in:

Fig. 1 flowchart for global motion estimation;
Fig. 2 motion vector sample selection for the global motion estimation;
Fig. 3 one of four symmetrical points is an outlier;
Fig. 4 two of four symmetrical points are outliers;
Fig. 5 three of four symmetrical points are outliers;
Fig. 6 inventive global motion estimator.

Exemplary embodiments

*Global motion modelling*

There are global motion models such as 2-parameters translational model, 4-parameters rotation-scale-translation (RST) model, 6-parameters affine model, 8-parameters projective model. In general, models using more parameters can describe the global motion in more accuracy, while of course the complexity will increase a lot at the same time.

However since, in general, camera rotation occurs much less frequently than zooming and panning, publication [2] proposes a generalised 4-parameters model for the global motion. This model not only includes the motion due to camera motion but also motion due to global objects, i.e. objects occupying.

The zooming and panning model can be separated into the following two models. Let there be N blocks in a video frame used for computing GME parameters and assume that the motion vector of a block is the motion vector of the central pixel of that block. Let $(mv_x(k), mv_y(k))$ be the local motion vector of the block $k$, $k$ = 0, 1, ..., $N$-1, whose central pixel's coordinates are $(x(k), y(k))$ with respect to the centre of the frame. In this regard, the camera motion model can be represented as follows. Zoom followed by pan:

$$\begin{bmatrix} mv_x(k) \\ mv_y(k) \end{bmatrix} = \begin{bmatrix} z_x x(k) \\ z_y y(k) \end{bmatrix} + \begin{bmatrix} p_x \\ p_y \end{bmatrix} \qquad (1)$$

wherein $k$ is the running block number inside one frame, $mv_x$ is the motion vector horizontal direction x-fraction value of the $k$-th block, $mv_y$ is the motion vector vertical direction y-fraction value of the $k$-th block, $z_x$ is the zoom factor horizontal direction fraction of the $k$-th block, $z_y$ is the zoom factor vertical direction fraction of the k-th block, $p_x$ is the pan factor horizontal direction fraction, $p_y$ is the pan factor vertical direction fraction. Pan followed by zoom:

$$\begin{bmatrix} mv_x(k) \\ mv_y(k) \end{bmatrix} = \begin{bmatrix} z_x(x(k)+p_x) \\ z_y(y(k)+p_y) \end{bmatrix} + \begin{bmatrix} p_x \\ p_y \end{bmatrix}$$
$$= \begin{bmatrix} z_x x(k) \\ z_y y(k) \end{bmatrix} + \begin{bmatrix} (1+z_x)p_x \\ (1+z_y)p_y \end{bmatrix} \tag{2}$$

These two models can be generalised by a single model that is used according to the invention:

$$\begin{bmatrix} mv_x(k) \\ mv_y(k) \end{bmatrix} = \begin{bmatrix} a_1 x(k) \\ a_3 y(k) \end{bmatrix} + \begin{bmatrix} a_2 \\ a_4 \end{bmatrix} \tag{3}$$

where

$$a_1 = z_x \ and \ a_2 = f_1(p_x, z_x)$$

$$a_3 = z_y \ and \ a_4 = f_2(p_y, z_y)$$

and *a1, a2, a3* and *a4* are the global motion parameters.
This processing corresponds to step 12 in Fig. 1.

*Iterative least-square estimation(ILSE) processing*

Considering the iterative least-square estimation processing used in [1], the optimum values for global motion parameters *a1, a2, a3* and *a4* are obtained by using the following criteria:

$$\min_{a_1,a_2} \sum_{k=0}^{N-1} (mv_x(k) - a_1 x(k) - a_2)^2 \tag{4}$$

$$\min_{a_3,a_4} \sum_{k=0}^{N-1} (mv_y(k) - a_3 y(k) - a_4)^2 \tag{5}$$

wherein N is the total number of blocks involved in the calculation, i.e. the number of blocks per frame the motion vectors of which blocks are used for calculating the global motion for that frame.
Expressions (4) and (5) are used to find the x and y values, respectively, of the global motion parameters.
By differentiating the expressions (4) and (5) with respect to the parameters *a1, a2, a3* and *a4* and setting the derivatives to zero (and thereby finding the minimum), the following equations are obtained:

$$a_1 = \frac{N\sum_{k=0}^{N-1} mv_x(k)x(k) - \left(\sum_{k=0}^{N-1} mv_x(k)\right)\left(\sum_{k=0}^{N-1} x(k)\right)}{N\sum_{k=0}^{N-1} x^2(k) - \left(\sum_{k=0}^{N-1} x(k)\right)^2} \qquad (6)$$

$$a_2 = \frac{\left(\sum_{k=0}^{N-1} mv_x(k)\right)\left(\sum_{k=0}^{N-1} x^2(k)\right) - \left(\sum_{k=0}^{N-1} mv_x(k)x(k)\right)\left(\sum_{k=0}^{N-1} x(k)\right)}{N\sum_{k=0}^{N-1} x^2(k) - \left(\sum_{k=0}^{N-1} x(k)\right)^2} \qquad (7)$$

$$a_3 = \frac{N\sum_{k=0}^{N-1} mv_y(k)y(k) - \left(\sum_{k=0}^{N-1} mv_y(k)\right)\left(\sum_{k=0}^{N-1} y(k)\right)}{N\sum_{k=0}^{N-1} y^2(k) - \left(\sum_{k=0}^{N-1} y(k)\right)^2} \qquad (8)$$

$$a_4 = \frac{\left(\sum_{k=0}^{N-1} mv_y(k)\right)\left(\sum_{k=0}^{N-1} y^2(k)\right) - \left(\sum_{k=0}^{N-1} mv_y(k)y(k)\right)\left(\sum_{k=0}^{N-1} y(k)\right)}{N\sum_{k=0}^{N-1} y^2(k) - \left(\sum_{k=0}^{N-1} y(k)\right)^2} \qquad (9)$$

The above procedure is carried out iteratively to eliminate the influence of the presence of local motion, and each iteration eliminates block motion vectors (and thereby motion vector outliers) which do not match the current global motion field. A special outlier elimination processing is used according to the invention, thereby keeping a symmetrical structure during these iterations.

*Optimised ILSE processing - sample selection*

The algorithms proposed in [2] and [7] are using all pixel blocks (i.e. all block motion vectors) of a frame to do the GME, which increases the computational complexity and decreases the prediction accuracy caused by the disturbance influence of moving objects in the picture.
The global motion estimation according to the invention is based on the assumption that in most video sequences with global motion only a few blocks are occluded by the moving objects, and that these objects are mostly located in or around the middle of a frame, but rarely near the borders of the frame. Therefore, instead of using the motion vectors of all blocks, the motion vectors of a few blocks only, especially blocks located near the borders of the frame (as illustrated in connection with Fig. 2), are sufficient to enable calculation of the global motion parameters.
The algorithm disclosed in [3] proposes a sample method using grid blocks near the borders of the frame for decreasing the computational load, and it intends to keep the global motion parameter accuracy.
Fig. 2 shows a frame or picture FR with a pixel block or macroblock grid to each of which belongs a local motion vector. However, in the picture area represented by the most outer pixel block grid G1 (denoted by blocks containing a white circle) of the frame, the measured motion vector usually does not match the real motion vector due to the entry of moving objects or the disappearance of moving objects or other boundary artefacts.
Therefore, according to the invention, the motion vectors of blocks or macroblocks located at the border of the frame are not taken into consideration for the global motion parameter calculation, only the picture area represented by e.g. pixel block grids G2 (second outer most grid ring, denoted by blocks containing a hatched circle) and G3 (third outer most grid ring, denoted by blocks containing a black circle) is used for the GME, in that the local motion vectors which were calculated before (using e.g. a well-known block matching technique) for each block of grids G2 and G3 are used for calculating global motion parameters for that frame, i.e. only the local motion vectors for the reference blocks located within areas G2 and G3 are used in step 13 of Fig. 1.

As an alternative, e.g. the G2 area motion vectors are not considered and/or motion vectors of one or more rings of blocks or macroblocks located more inner than that of area G3 are considered.

*Optimised ILSE processing - symmetrical sample*

In the following description, the concept of symmetrical block groups is used to keep a symmetrical structure in the calculations. Let symmetrical block groups be the four blocks, which consist of any block ('sample') in areas G2 or G3 with its corresponding three symmetrical blocks: one is located symmetrical to the x-axis, a further one is located symmetrical to the y-axis (the x/y axis crossing at the centre of the frame), and the third one is located symmetrical across the centre of the frame, as illustrated by three example block groups in Fig. 2:
one block group is marked by '+', another one is marked by 'X', and a third one is marked by '◇'.

In the above first step of the iterative ILSE processing, due to the symmetrical structure of the measured motion vectors, advantageously the above equations (6) to (9) can be simplified by equations (10) to (13), respectively:

$$a_1 = \frac{\sum_{k=0}^{N-1} mv_x(k)x(k)}{\sum_{k=0}^{N-1} x^2(k)} \tag{10}$$

$$a_2 = \frac{\left(\sum_{k=0}^{N-1} mv_x(k)\right)}{N} \tag{11}$$

$$a_3 = \frac{\sum_{k=0}^{N-1} mv_y(k)y(k)}{\sum_{k=0}^{N-1} y^2(k)} \tag{12}$$

$$a_4 = \frac{\left(\sum_{k=0}^{N-1} mv_y(k)\right)}{N} \tag{13}$$

Since initially all the blocks or macroblocks having motion vector outliers are taken into account, the candidate global estimation parameter set will be affected by the local motion of moving objects. After each iteration, the computed candidate global motion parameters are used to eliminate the influence of such local motion. This is carried out by using the below-explained rules.

Normally, the simplified equations (10) to (13) are no longer valid due to the unsymmetrical sample structure after removing outliers after the first iteration. However, according to the invention the following rules for refinement are used in order to keep the symmetrical structure, such that the simplified equations (10) to (13) can still be used so as to reduce the computational load. Following each iteration step, the useful block motion vectors are re-organised into symmetrical block groups as explained above in this section. By applying the inventive rules, the symmetrical structure of available points (i.e. block locations) can be kept for the next iteration, after outliers have been removed.

*Rules applied for keeping the symmetrical structure*

Initially, before the iteration looping, the candidate global motion parameters can be calculated from all motion vectors of the blocks being located in areas G2 and G3.

The following rules are used to keep the symmetrical structure of available points for the next iteration.

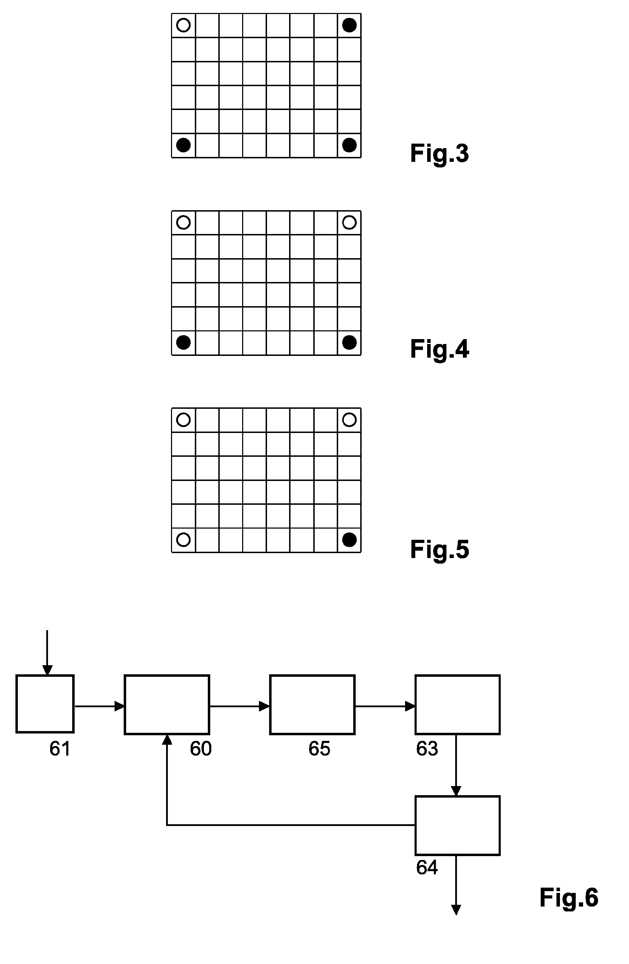

Figures 3 to 5 represent a partial grid as compared to the complete grid depicted in Fig. 2.

A) In case, as depicted in Fig. 3 by the hatched circle, one of the four symmetrical points is an outlier, i.e. a block position the motion vector for which block has a motion amount outlier value, or has at least one motion x or y component amount outlier value, with respect to the current candidate global motion calculated for that block position:

this outlier position is kept for the current and the next iteration steps but its current motion vector is replaced by the motion vector calculated for that block position using the latest global motion parameters.

B) In case two of the four symmetrical points are outliers, as depicted in Fig. 4 by the hatched circles:

the motion amount values or motion component amount values of the useful blocks which remain after removing all four motion amount values or motion component amount values of this block group are compared with a pre-determined threshold $T_{valid}$, and if this threshold is higher than the motion amount values or motion component amount values of the remaining useful blocks, all these four motion amount values or motion component amount values of this current block group are regarded as representing outliers and the motion vectors or motion component values of the corresponding blocks are eliminated for the next iteration loops,

otherwise the two outlier positions are kept for the next iteration loops but their current motion vectors are replaced by motion vectors calculated for their block or macroblock positions from the latest set of candidate global motion parameters.

C) In case three of the four symmetrical points are outliers, as depicted in Fig. 5 by the hatched circles:

all these four points are regarded as representing outliers and the motion vectors of the corresponding blocks are eliminated from the current and following iterative global motion estimation processing.

The block/macroblock motion vectors of all currently remaining block groups of grid areas G2 and G3 are checked under rules A) to C) in each global motion estimation processing iteration step.

As an alternative, the block groups may contain a number other than '4' of symmetrical blocks, e.g. 8 or 12. In such case the above rules are adapted correspondingly.

*Optimised ILSE proc. - elimination of non-reliable zero motion vectors*

Since SSD (Sum of Squared Difference) and SAD (Sum of Absolute Difference) are usually used as error matrix (i.e. for motion vector error calculation) in searching motion vectors, the resulting motion vectors do not represent the real camera motion especially in case a large smooth picture content area exists in the background. Therefore generally in video sequences with camera motion, a non-reliable zero motion vector (0,0) does not represent the real motion of the scene. Further, it can be seen from equations (10) to (13) that a non-reliable zero motion vector will bring disturbance into the calculation. Therefore the influence of non-reliable zero motion vectors is reduced or even eliminated by further applying the following rules:

D) A non-reliable zero motion vector of a block is regarded as being an outlier;

E) The quantity of blocks having a candidate zero motion is accumulated per frame to a number $N_{zero}$. If $N_{zero}$ is greater than a pre-defined threshold $T_{still}$, then the scene is considered as being a still scene without camera motion, and there is no need for further global motion vector estimation for that frame, i.e. the scene in that frame is considered to have no global motion.

The above-described optimised ILSE processing corresponds to steps 13 to 15 in Fig. 1.

*Performance analysis - computational load reduction in the first iteration*

As Fig. 2 shows, because only the G2 and G3 area blocks instead of all the blocks of a frame are used, the number of operations will be much smaller. In case the frame size in pixels is [width, height]= [352, 288] and macroblocks are choosen as the processing unit and the block size is therefore [N, N]=[16, 16], then the total number of blocks per frame is (width*height)/(N*N) = 396. Because according to the invention only G2 and G3 grid blocks are used, the total number of blocks used per frame is reduced to (352/16-3)*2 + (288/16-3)*2 + (352/16-5)*2 + (288/16-5)*2 = 128. Therefore, in the first step of the iterative operation, the computational complexity is reduced by about 68% as compared to the processing described in [2].

*Performance analysis - computational load reduction in the following iterations*

As mentioned above, normally the simplified equations (10) to (13) are no longer valid after the first iteration due to the unsymmetrical sample (i.e. motion vector location) structure, but due to the application of rules A) to C) the symmetrical structure is kept and these simplified equations can be used to reduce the computational load without loss of accuracy.
In the below table, $n$ and $\bar{n}$ are the quantities of block motion vectors for iteration without and with, respectively, this refinement for keeping the symmetrical structure.
In most frames there is a small difference between $n$ and $\bar{n}$ because of the refinement of the outlier selection, while that difference should not much influence the coarse complexity comparison.
From the below table it can be concluded that roughly 50% of the addition operations are eliminated during calculation of parameters $a_1$ and $a_3$, and roughly 75% of the addition operations as well as 100% of the multiplication operations during calculation of parameters $a_2$ and $a_4$.

Table: comparison of computational load reduction

|  | calculation of a1, a3 | | calculation of a2, a4 | |
| --- | --- | --- | --- | --- |
|  | prior art | invention | prior art | invention |
| additions | $4n$ | $2\bar{n}$ | $4n$ | $\bar{n}$ |
| multiplications | $4n$ | $4\bar{n}$ | $4n$ | 0 |

For the global motion estimator in Fig. 6, motion vectors for blocks are calculated and/or stored or collected in stage 61. Stage 60 checks, in each iteration loop of the global motion estimation, for each symmetrical block group in the ring or rings (e.g. areas G2 and G3) of blocks the quantity of motion vectors the motion amount values of which, or the motion component amount values of which, are outliers when compared to a corresponding motion vector calculated for the corresponding block position from the latest set of candidate global motion parameters. Stage 65 decides according to the given set of rules whether, for the further iteration loops to be carried out, one or more original motion vector values of the corresponding symmetrical block group are to be corrected and kept, or the motion vector values of the corresponding symmetrical block group are no more used. Stage 63 calculates from the resulting motion vector values an updated set of candidate global motion parameters. Stage 64 checks whether or not a desired or sufficient accuracy of said set is achieved or a given iteration loop count is reached and, if true, outputs the corresponding set of global motion parameters and, if not true, causes the next iteration loop to continue with the processing in stage 60.
A digital video signal encoded using the above-described global motion parameters can be contained or stored or recorded on a storage medium, e.g. an optical storage medium. Upon replay, the global motion parameters from the storage medium are used in a corresponding video signal decoder for decoding the encoded video signal.

**Claims**

1. Method of calculating iteratively for a picture (FR) or a picture sequence a set of global motion parameters (*a1, a2, a3, a4*) from motion vectors (*mv*) assigned to blocks or macroblocks into which each picture is divided, wherein not all block or macroblock motion vectors of a picture are used for said global motion parameter calculation but only motion vectors for blocks or macroblocks which are located in a ring near (G2, G3) the borders but not at the borders of said picture (FR), **characterised in that** for each iteration loop the following steps are carried out:

    - checking (15) for each symmetrical block group in said ring of blocks or macroblocks, said symmetrical block group being related to a pre-determined number of blocks or macroblocks, the quantity of motion vectors the motion amount values of which, or the motion component amount values of which, are outliers when compared to a corresponding motion vector calculated for the corresponding block or macroblock position from the latest set of candidate global motion parameters;
- deciding (15) according to a given set of rules whether, for the current and further iteration loops to be carried out, one or more original motion vector values of the corresponding symmetrical block group are to be corrected and kept, or the motion vector values of the corresponding symmetrical block group are no more used;
- calculating (13) from the resulting motion vector values an updated set (*a1, a2, a3, a4*) of candidate global motion parameters;
- checking (14) whether or not a desired or sufficient accuracy of said set is achieved or a given iteration loop count is reached and, if true, outputting (16) the corresponding set of global motion parameters and, if not true, continuing with the next iteration loop.

2. Apparatus for calculating iteratively for a picture (FR) or a picture sequence a set of global motion parameters (*a1, a2, a3, a4*) from motion vectors *(mv)* assigned to blocks or macroblocks into which each picture is divided, wherein not all block or macroblock motion vectors of a picture are used for said global motion parameter calculation but only motion vectors for blocks or macroblocks which are located in a ring near (G2, G3) the borders but not at the borders of said picture (FR), said apparatus including:

   - means (60) being adapted for checking, in each iteration loop, for each symmetrical block group, said symmetrical block group being related to a pre-determined number of blocks or macroblocks, in said ring of blocks or macroblocks the quantity of motion vectors the motion amount values of which, or the motion component amount values of which, are outliers when compared to a corresponding motion vector calculated for the corresponding block or macroblock position from the latest set of candidate global motion parameters;
   - means (65) being adapted for deciding according to a given set of rules whether, for the current and further iteration loops to be carried out, one or more original motion vector values of the corresponding symmetrical block group are to be corrected and kept, or the motion vector values of the corresponding symmetrical block group are no more used;
   - means (63) being adapted for calculating from the resulting motion vector values an updated set (*a1, a2, a3, a4*) of candidate global motion parameters;
   - means (64) being adapted for checking whether or not a desired or sufficient accuracy of said set is achieved or a given iteration loop count is reached and, if true, for outputting the corresponding set of global motion parameters and, if not true, for continuing with the next iteration loop.

3. Method according to claim 1, or apparatus according to claim 2, wherein said symmetrical block groups each contain values for four motion vectors.

4. Method or apparatus according to claim 3, wherein said set of rules is as follows:

   - in case one of the four motion amount values, or motion component amount values, in a symmetrical block group is an outlier with respect to the latest candidate global motion calculated for the corresponding block or macroblock position, this outlier position is kept for the current and the further iteration loops but its original, or current, motion vector is replaced by a motion vector calculated for the corresponding block or macroblock position using the latest set of candidate global motion parameters;
   - in case two of the four motion amount values, or motion component amount values, in a current symmetrical block group are outliers with respect to the latest candidate global motion calculated for the corresponding block or macroblock positions, the motion amount values or motion component amount values of the useful blocks which remain after removing all four motion amount values or motion component amount values of this block group are compared with a pre-determined threshold ($T_{valid}$), and if this threshold is higher than the motion amount values or motion component amount values of said remaining useful blocks, all said four motion amount values or motion component amount values of said current block group are regarded as representing outliers and the motion vectors or motion component values of the corresponding blocks are eliminated for the next iteration loops,

   otherwise the two outlier positions are kept for the next iteration loops but their current motion vectors are replaced by motion vectors calculated for their block or macroblock positions from the latest set of candidate global motion parameters;
   - in case three of the four motion amount values, or motion component amount values, in a symmetrical block group are outliers with respect to the latest candidate global motion calculated for the corresponding block or macroblock positions, the motion amount values or motion component amount values of all motion vectors of the outlier blocks or macroblocks in that symmetrical block group are eliminated from the processing in the current and further iteration loops.

**5.** Method or apparatus according to claim 4, wherein a non-reliable zero motion vector of a block or macroblock is regarded as being an outlier.

**6.** Method according to one of claims 1 and 3 to 5, or apparatus according to one of claims 2 to 5, wherein the quantity of blocks or macroblocks having a zero motion is accumulated per frame to a number $N_{zero}$, and if said number $N_{zero}$ is greater than a pre-defined threshold value ($T_{still}$), the scene in that frame is considered to have no global motion.

**7.** Method according to one of claims 1 and 3 to 6, or apparatus according to one of claims 2 to 6, wherein said set of global motion parameters includes values $a1$, $a2$, $a3$ and $a4$ being assigned to the following global motion model:

$$\begin{bmatrix} mv_x(k) \\ mv_y(k) \end{bmatrix} = \begin{bmatrix} a_1 x(k) \\ a_3 y(k) \end{bmatrix} + \begin{bmatrix} a_2 \\ a_4 \end{bmatrix},$$

wherein

$$a_1 = z_x \ and \ a_2 = f_1(p_x, z_x)$$

$$a_3 = z_y \ and \ a_4 = f_2(p_y, z_y)$$

and wherein $mv_x(k)$ and $mv_y(k)$ are the horizontal and vertical direction components of the motion vector for a block or macroblock $k$, $k$ = 0, 1, ..., N-1, whose central pixel's coordinates are $x(k)$, $y(k)$ with respect to the centre of the frame, and wherein N is the number of blocks or macroblocks per frame the motion vectors of which blocks or macroblocks are used for calculating the global motion for that frame, $k$ is the running block or macroblock number inside one frame, $z_x$ is the zoom factor horizontal direction fraction of the $k$-th macroblock, zy is the zoom factor vertical direction fraction of the k-th macroblock, $p_x$ is the pan factor horizontal direction fraction, and $p_y$ is the pan factor vertical direction fraction.

**8.** Method or apparatus according to claim 7, wherein said global motion parameter values $a1$, $a2$, $a3$ and $a4$ are calculated as follows:

$$a_1 = \frac{\sum_{k=0}^{N-1} mv_x(k)x(k)}{\sum_{k=0}^{N-1} x^2(k)},$$

$$a_2 = \frac{\left(\sum_{k=0}^{N-1} mv_x(k)\right)}{N},$$

$$a_3 = \dfrac{\displaystyle\sum_{k=0}^{N-1} mv_y(k)y(k)}{\displaystyle\sum_{k=0}^{N-1} y^2(k)} \quad ,$$

$$a_4 = \dfrac{\left(\displaystyle\sum_{k=0}^{N-1} mv_y(k)\right)}{N} \quad .$$

9. Storage medium, for example on optical disc, that contains or stores, or has recorded on it, a digital video signal encoded using at least one set of global motion parameters (*a1, a2, a3, a4*) calculated according to the method of one of claims 1 and 3 to 8, said encoded digital video signal including said at least one set of global motion parameters.

**Fig.1**

**Fig.2**

Fig.3

Fig.4

Fig.5

Fig.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TUAN-KIANG CHIEW ; JAMES T.H. CHUNG-HOW et al.** Rapid Block-Based Global Motion Estimation and its Applications. *ICCE,* June 2002
- **GAGAN B. RATH ; ANAMITRA MAKUR.** Iterative Least Squares and Compression Based Estimations for a Four-Parameter Linear Global Motion Model and Global Motion Compensation. *IEEE Transactions on Circuits and Systems for Video Technology,* October 1999, vol. 9 (7), 1075-1099
- **G. SORWAR ; M.M. MURSHED ; L.S. DOOLEY.** Fast Global Motion Estimation using Iterative Least-Square Estimation Technique. *2003 Joint Conference of the Fourth International Conference on Information, Communications and Signal Processing and Fourth Pacific-Rim Conference on Multimedia, ICICS-PCM,* 15 December 2003
- **SANJEEV KUMAR ; MAINAK BISWAS ; TRUONG Q NGUYEN.** GLOBAL MOTION ESTIMATION IN FREQUENCY AND SPATIAL DOMAIN. *ICASSP,* May 2004